(19) Europäisches Patentamt
European Patent Office
Office européen des brevets

(11) **EP 3 113 144 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(51) Int Cl.:
*G08G 1/14* *(2006.01)*    *G08G 1/16* *(2006.01)*

(21) Anmeldenummer: **16169125.8**

(22) Anmeldetag: **11.05.2016**

(54) **VERFAHREN ZUM ERMITTELN EINER NUTZBREITE EINES STRASSENABSCHNITTS**

METHOD FOR DETERMINING A USEFUL WIDTH OF A ROAD SECTION

PROCEDE DE DETERMINATION D'UNE LARGEUR UTILE D'UN TRONÇON DE ROUTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.07.2015 DE 102015212296**

(43) Veröffentlichungstag der Anmeldung:
**04.01.2017 Patentblatt 2017/01**

(73) Patentinhaber: **Robert Bosch GmbH 70442 Stuttgart (DE)**

(72) Erfinder:
• **Mayer, Philipp**
**70176 Stuttgart (DE)**
• **Abeling, Peter Christian**
**30171 Hannover (DE)**

(56) Entgegenhaltungen:
EP-A1- 2 234 085        DE-A1-102009 028 644
JP-A- 2009 175 962

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 113 144 B1

**Beschreibung**

Die Erfindung betrifft ein Verfahren zum Ermitteln einer Nutzbereite eines Straßenabschnitts.

Stand der Technik

Im Stand der Technik sind verschiedene Verfahren bekannt, Parklücken mithilfe von distanzbasierten Sensoren (z.B. Ultraschall-, Radar-, Laser-, Video-, Lidarsensoren) zu detektieren. Fahrerassistenzsysteme zum halbautomatisierten Einparken in derartig detektierte Parklücken sind bekannt.

Ein Übertragen von Parklückendaten zu einem Server ist beispielsweise aus DE 10 2004 062 021 A1, DE 10 2009 028 024 A1 und DE 10 2008 028 550 A1 bekannt.

Aus JP 2009 175 962 A ist ein Parkplatz-Managementsystem bekannt, welches eine Verfügbarkeit von verfügbarem Parkplatz durch eine Unterscheidung zwischen einem Fahrbahnbereich und einem freien Parkplatz prüft, ohne vorher eine Parkplatzkarte erstellen zu müssen.

Offenbarung der Erfindung

Es ist eine Aufgabe der vorliegenden Erfindung, ein Verfahren zum Ermitteln einer Nutzbreite eines Straßenabschnitts bereitzustellen.

Gemäß einem ersten Aspekt wird die Aufgabe gelöst mit einem Verfahren nach Anspruch 1.

Auf vorteilhafte Weise kann dadurch eine Parklückenermittlungseinrichtung verwendet werden, um eine Nutzbreite eines Straßenabschnitts zu ermitteln. Mit der ermittelten Nutzbreite kann einem Fahrer vorteilhaft eine spezifische Routenführung vorgeschlagen werden, die enge Straßen vermeidet. Zudem können freie Parkflächen ermittelt und dem Fahrer in Form einer Parkraumkarte bereitgestellt werden. Vorteilhaft ist eine Auflösung der genannten Nutzbreitenermittlung beliebig einstellbar, sodass Nutzbreiten auf jeweils einem definiert langen Straßenabschnitt ermittelbar sind.

Bevorzugte Ausführungsformen des Verfahrens sind Gegenstand von abhängigen Ansprüchen.

Eine vorteilhafte Weiterbildung des Verfahrens zeichnet sich dadurch aus, dass für den Fall, dass Parklücken nur rechts vom Ermittlungsfahrzeug ermittelt wurden und ein Quotient aus Anzahl von Befahrungen und Anzahl ermittelter Parklücken eine definierte Schwelle überschreitet, die Nutzbreite aus folgender Beziehung ermittelt wird: Nutzbreite > Reichweite der Ermittlungseinrichtung links vom Ermittlungsfahrzeug + Breite des Ermittlungsfahrzeugs + Mittelwert der ermittelten lateralen Abstände rechts vom Ermittlungsfahrzeug. Auf diese Weise kann im Falle, dass Parklückendetektionen nur in einer lateralen Richtung zum Ermittlungsfahrzeug vorliegen, eine ungefähre Nutzbreite des Straßenabschnitts abgeschätzt werden. Der genannte Quotient kann beispielsweise eine Rauschschwelle repräsentieren, unterhalb derer eine Ermittlung der Nutzbreite nicht durchgeführt wird.

Eine weitere vorteilhafte Weiterbildung des Verfahrens zeichnet sich dadurch aus, dass im Falle, dass Parklücken beidseits des Ermittlungsfahrzeugs ermittelt wurden und ein Quotient aus Befahrungen und Anzahl ermittelter Parklücken eine definierte Schwelle überschreitet, die Nutzbreite aus folgender Beziehung ermittelt wird: Nutzbreite = Mittelwert der ermittelten lateralen Abstände links vom Ermittlungsfahrzeug + Breite des Ermittlungsfahrzeugs + Mittelwert der ermittelten lateralen Abstände rechts vom Ermittlungsfahrzeug. Auf diese Weise kann die Nutzbreite exakt ermittelt werden. Auch in diesem Fall kann der genannte Quotient eine definierte Schwelle für Rauschen definieren, unterhalb derer keine Ermittlung der Nutzbreite erfolgt.

Eine vorteilhafte Weiterbildung des Verfahrens sieht vor, dass die Nutzbreite von der Ermittlungseinrichtung ermittelt wird. Auf diese Weise wird die Nutzbreite bereits im Ermittlungsfahrzeug ermittelt und kann z.B. fahrzeuginternen Assistenzsystemen zur Verfügung gestellt werden. Eine hohe Datenaktualität ist auf diese Weise unterstützt.

Eine weitere vorteilhafte Weiterbildung des Verfahrens sieht vor, dass Ermittlungsdaten an eine Servereinrichtung übermittelt werden. Auf diese Weise kann die Ermittlung der Nutzbreite vom Ermittlungsfahrzeug auf eine Servereinrichtung verlagert werden, die in der Regel eine größere Rechenkapazität aufweist und über ein größeres Datenvolumen verfügt als das Ermittlungsfahrzeug.

Eine vorteilhafte Weiterbildung des Verfahrens sieht vor, dass die Ermittlungsdaten automatisiert an die Servereinrichtung übermittelt werden. Auf diese Weise kann auf der Servereinrichtung langfristig eine große "historische" Datenmenge aggregiert werden, die eine hohe Aktualität und Genauigkeit besitzt.

Eine weitere vorteilhafte Weiterbildung des Verfahrens sieht vor, dass die Nutzbreite an die Servereinrichtung übermittelt wird oder wobei die lateralen Abstände an die Servereinrichtung übermittelt werden und wobei die Nutzbreite mittels der Servereinrichtung ermittelt wird. Auf diese Weise kann vorteilhaft ein Datenmaterial individuell bearbeitet werden, wodurch im Ergebnis eine Ermittlung der Nutzbreite noch genauer durchführbar ist.

Eine weitere vorteilhafte Weiterbildung des Verfahrens zeichnet sich dadurch aus, dass die Nutzbreite über eine definierte Länge des Abschnitts der Straße ermittelt wird. Auf diese Weise können selektive Werte für die Nutzbreite bereitgestellt werden, wodurch vorteilhaft z.B. abrupte Straßenverengungen bzw. -verbreiterungen berücksichtigt werden können.

Die Erfindung wird im Folgenden mit weiteren Merkmalen und Vorteilen anhand von zwei Figuren im Detail beschrieben. Dabei bilden alle offenbarten Merkmale, unabhängig von ihrer Rückbeziehung in den Patentansprüchen sowie unabhängig von ihrer Darstellung in der Beschreibung und in den Figuren den Gegenstand der vorliegenden Erfindung. Die Figuren sind insbesondere dazu gedacht, die erfindungswesentlichen Prinzipien zu verdeutlichen.

In den Figuren zeigt:

Fig. 1    eine Prinzip Skizze zum Erläutern eines Funktionsprinzips des erfindungsgemäßen Verfahrens; und

Fig. 2    einen prinzipiellen Ablauf einer Ausführungsform des erfindungsgemäßen Verfahrens.

Beschreibung von Ausführungsformen

Die sogenannte "Nutzbreite" bzw. "befahrbare Fahrbreite" bzw. "befahrbare Fahrspur" bzw. "reale Straßenbreite" einer Straße ist im Wesentlichen definiert durch die physikalische Breite der Straße von Bordsteinkante zu Bordsteinkante abzüglich einer Breite jeweils eines geparkten Fahrzeuges an jedem Straßenrand. Die genannte Nutzbreite stellt für einen Fahrer eines Kraftfahrzeugs einen wichtigen Nutzparameter bei einer Fortbewegung auf einer Straße dar, was unter anderem dadurch bedingt ist, dass Kraftfahrzeuge und fahrtechnische Fertigkeiten der Fahrer unterschiedlich ausgebildet sind, wodurch eine Fähigkeit und/oder eine Intention zu einer Befahrung von Straßen individuell verschieden sein kann. Oftmals ist eine geringe Nutzbreite für einen Fahrer ein Motiv, eine Straße nicht zu befahren, weil Fahr- und/oder Parkmanöver dort nur unter erschwerten Umständen möglich sind.

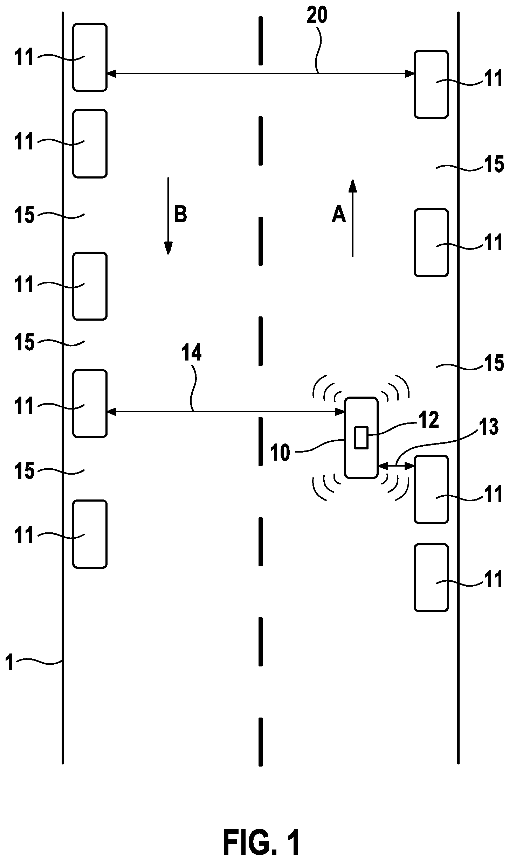

Fig. 1 zeigt ein prinzipielles Funktionsprinzip des vorgeschlagenen Verfahrens zur Ermittlung einer Nutzbreite eines Straßenabschnitts. Erkennbar ist ein Ermittlungsfahrzeug 10, welches eine Straße 1 bei Rechtsverkehr in Fahrtrichtung A befährt. An der Straße 1 sind an beiden Straßenrändern parkende Fahrzeuge 11 erkennbar, wobei zwischen den parkenden Fahrzeugen 11 Parklücken 15, z.B. in Form von Freiflächen, Einfahrtsbereiche auf Grundstücke, Hauseinfahrtsbereiche, usw. vorhanden sind. Das Ermittlungsfahrzeug 10 weist eine Ermittlungseinrichtung 12 zum Erfassen der Parklücken 15 auf, wobei die Ermittlungseinrichtung 12 einen Ultraschallsensor, einen Radarsensor oder einen anderen geeigneten Sensor zur Ermittlung einer Distanz zu einem Objekt aufweist.

Vorgesehen ist, bei der Befahrung Parklücken 15 zu detektieren und im Zuge des Detektierens der Parklücken 15 laterale Abstände 13, 14 zu geparkten Fahrzeugen 11 zu ermitteln. Bei der Befahrung eines definierten Abschnitts der Straße 1 werden auf diese Weise möglichst viele laterale Distanzen 13 zwischen dem Ermittlungsfahrzeug 10 und den geparkten Fahrzeugen 11 erfasst, wobei in beide laterale Richtungen im Wesentlichen in einem rechten Winkel links und rechts des Ermittlungsfahrzeugs 10 wenigstens eine Messung durchgeführt wird. Aus den ermittelten lateralen Abständen 13, 14 wird die Nutzbreite 20 der Straße 1 folgendermaßen ermittelt, wobei zwei unterschiedliche Konstellationen möglich sind:

Für den Fall, dass nach links vom Ermittlungsfahrzeug 10 keinerlei Detektionen von Parklücken 15 bzw. von lateralen Abstände 14 zu geparkten Fahrzeug 11 getätigt wurden, kann die Nutzbreite 20 nach folgender Formel (1) ermittelt bzw. abgeschätzt werden:

Nutzbreite > Sensorreichweite nach links + Mittelwert der lateralen rechten Abstände zu geparkten Fahrzeugen                    (1)

Für den Fall, dass sowohl links und rechts vom Ermittlungsfahrzeug 10 Detektionen von Parklücken 15 bzw. von lateralen Abständen 14 (links) und lateralen Abständen 13 (rechts) durchgeführt wurden, kann die Nutzbreite 20 nach folgender Formel (2) exakt ermittelt werden:

Nutzbreite = mittlerer Abstand der lateralen linken Abstände zu geparkten Fahrzeugen + Fahrzeugbreite + Mittelwert der lateralen rechten Abstände zu

geparkten Fahrzeugen                    (2)

Für beide genannten Fälle wird berücksichtigt, dass ein Quotient aus einer Anzahl von Befahrungen des auszuwertenden Straßenabschnitts und Detektionen von Parklücken 15 bzw. lateralen Abständen 13, 14 eine vorab festgelegte, definierte Schwelle übersteigen muss, um als "echte" Parklückendetektion zu gelten. Beispielsweise kann ein Wert der genannten Schwelle in einer Größenordnung von ca. 0,1, bevorzugt ca. 0,05, noch mehr bevorzugt ca. 0,01 liegen. Falls der Quotient unterhalb des definierten Werts liegt, wird davon ausgegangen, dass es sich um Signalrauschen und um keine echte Parklückendetektion handelt, so dass daraus resultierend keine Ermittlung einer Nutzbreite 20 durchgeführt wird.

Je nach verwendeter Sensortechnologie der Ermittlungseinrichtung 12 kann eine unterschiedliche Sensorreichweite der Ermittlungseinrichtung 12 realisiert werden, wodurch in Abhängigkeit von der verwendeten Technologie unterschiedliche Nutzbreiten 20 ermittelbar sind. Eine Größenordnung für eine ermittelbare Nutzbreite 20 beträgt bei Ultraschall ca. 10m bis ca. 15m, eine Größenordnung einer ermittelbaren Nutzbreite 20 beträgt bei Radar ca. 20 m - ca. 30 m. Im Falle, dass die Straße 1 bei Befahrung in Fahrtrichtung immer enger wird, wird eine linksseitige Detektion immer wahrscheinlicher, weil dadurch die Wahrscheinlichkeit steigt, dass die Ermittlungseinrichtung 12 genügend weit abstrahlt, um Reflektionen an der linken Seite des Ermittlungsfahrzeugs 10 zu erzeugen.

Die Genauigkeit und die Verlässlichkeit der Ermittlung der Nutzbreite 20 nimmt mit der Anzahl an Durchfahrten durch den jeweiligen Straßenabschnitt zu, da dann die Mittelung mit einer erhöhten Anzahl an Messwerten durchgeführt wird.

Vorteilhaft kann die Ermittlung der Nutzbreite 20 bereits am Ermittlungsfahrzeug 10 selbst, zum Beispiel mittels der Ermittlungseinrichtung 12 oder eines dafür vorgesehenen Steuergeräts durchgeführt werden. Es ist alternativ oder zusätzlich auch denkbar, dass sämtliche erfassten Daten mittels einer nicht dargestellten funkbasierten Kommunikationseinrichtung (z.B. basierend auf GSM, EDGE, UMTS, LTE, WLAN, usw.) des Ermittlungsfahrzeugs 10 an eine Servereinrichtung übermittelt werden, wobei in diesem Fall die Ermittlung der Nutzbreite 20 von der in der Regel wesentlich leistungsstärkeren Servereinrichtung durchgeführt wird.

In einer weiteren Alternative kann auch vorgesehen sein, dass lediglich alle gemessenen Einzelwerte ("Rohdaten") der lateralen Abstände 13, 14 an die Servereinrichtung übermittelt werden. In diesem Falle werden keine Daten betreffend Parklücken 15 an die Servereinrichtung übermittelt.

Mittels der Parklückendetektionen wird somit eine Art von Vorfilterung durchgeführt, die zur Ermittlung der Nutzbreite 20 des Straßenabschnitts verwendet wird. Vorteilhaft kann das Verfahren in bestehende Parklückenermittlungseinrichtungen implementiert werden.

Im Ergebnis kann auf diese Weise eine Nutzbreite 20 an Fahrzeugnutzer übermittelt werden, beispielsweise in Form einer Darstellung auf einem Navigationsgerät. Ferner kann auf diese Weise eine Aggregation von Daten zu einer Parkraumkarte durchgeführt werden, aus der ersichtlich ist, welche Bereiche von Straßen 1 überhaupt als Parkflächen geeignet sind und benutzt werden können. Damit lassen sich zum Beispiel auch spezifische Parkraumkarten mit Wahrscheinlichkeiten einer Verfügbarkeit von freien Parkplätzen zu definierten Tageszeiten erstellen.

Vorzugweise ist vorgesehen, die Nutzbreite 20 über einen frei definierbaren beliebig langen Abschnitt der Straße 1 zu ermitteln. Auf diese Weise ist es möglich, Straßenabschnitte mit stark unterschiedlichen Nutzbreiten 20 (beispielsweise aufgrund von Baustellen, Verkehrsumleitungen, usw.) zu ermitteln und entsprechend datenmäßig aufzubereiten. Eine Auflösung des Abschnitts, in welchem die Nutzbreite 20 der Straße 1 ermittelt wird, ist auf diese Weise unkompliziert möglich.

Vorzugweise kann auch vorgesehen sein, dass die beschriebenen Detektionen auch in einer zweiten Fahrtrichtung B der Straße 1 durchgeführt werden und mit den Messwerten der in Fahrtrichtung A durchgeführten Befahrung der Straße 1 korreliert bzw. abgeglichen werden. Auf diese Weise kann eine Datenqualität der lateralen Abstände 13, 14 bzw. eine Genauigkeit der daraus ermittelten Nutzbreite 20 noch weiter verbessert werden.

Vorteilhaft ist mit dem beschriebenen Verfahren zur Ermittlung der Nutzbreite 20 keine hochgenaue Eigenlokalisierung des Fahrzeugs, z.B. unter Verwendung einer GPS-Positionserfassungseinrichtung erforderlich.

Vorteilhaft kann die Erfindung mit unterschiedlichen Technologien umgesetzt werden, z.B. mit Ultraschall oder mit Radar, wodurch auch kostenmäßige Aspekte berücksichtigt werden können.

Vorzugsweise kann das Verfahren als eine Software implementiert werden, wodurch eine leichte Adaptierbarkeit bzw. Aktualisierbarkeit des Verfahrens unterstützt ist.

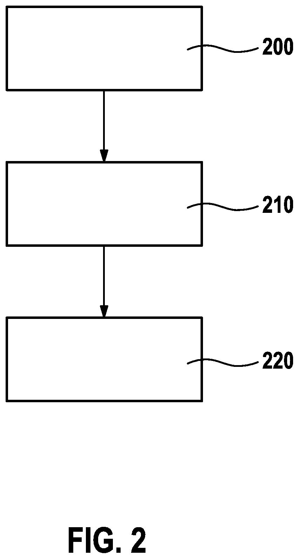

Fig. 2 zeigt ein prinzipielles Ablaufdiagramm einer Ausführungsform des erfindungsgemäßen Verfahrens.

In einem Schritt 200 werden ein Befahren der Straße 1 in einer ersten Fahrtrichtung A und Ermitteln von Parklücken 15 anhand von Echoprofilen einer in einem Ermittlungsfahrzeug 10 angeordneten Ermittlungseinrichtung 12 durchgeführt.

In einem Schritt 210 wird werden ein Ermitteln von lateralen Abständen 13, 14 zwischen der Ermittlungseinrichtung 12 und parkenden Fahrzeugen 11 an beiden Straßenrändern durchgeführt, wobei wenigstens eine Ermittlung von Parklücken 15 und lateralen Abständen 13 rechts vom Ermittlungsfahrzeug 10 und wenigstens eine Ermittlung der Parklücken 15 und lateralen Abstände 14 links vom Ermittlungsfahrzeug 10 durchgeführt wird.

In einem Schritt 220 wird die Nutzbreite 20 aus den ermittelten lateralen Abständen 13, 14 ermittelt.

Zusammenfassend wird mit der vorliegenden Erfindung ein Verfahren zur Ermittlung einer Nutzbreite einer Straße vorgeschlagen. Dabei ist vorgesehen, eine Parklückendetektionseinrichtung derart zu funktionalisieren, dass sie weitere Information in Form einer befahrbaren Fahrspur bzw. einer Nutzbreite eines Straßenabschnitts bereitstellt. Im Ergebnis wird dabei eine Art "Data-Mining" von Parklückendetektionen durchgeführt, welches sich die Tatsache zu Nutze macht, dass bei breiten Straßen linksseitige Detektionen anders ausgeprägt sind als rechtsseitige Detektionen.

EP 3 113 144 B1

Dies entspricht den Fakten bei Rechtsverkehr, wobei die Fakten bei Linksverkehr genau umgekehrt vorliegen.

**Patentansprüche**

1. Verfahren zum Ermitteln einer Nutzbreite (20) eines Abschnitts einer Straße (1), aufweisend die Schritte:

   - Befahren der Straße (1) in einer ersten Fahrtrichtung (A) und Ermitteln von Parklücken (15) anhand von Echoprofilen einer in einem Ermittlungsfahrzeug (10) angeordneten Ermittlungseinrichtung (12);
   - Ermitteln von lateralen Abständen (13, 14) zwischen der Ermittlungseinrichtung (12) und parkenden Fahrzeugen (11) an beiden Straßenrändern, wobei wenigstens eine Ermittlung von Parklücken (15) und lateralen Abständen (13) rechts vom Ermittlungsfahrzeug (10) und wenigstens eine Ermittlung der Parklücken (15) und lateralen Abstände (14) links vom Ermittlungsfahrzeug (10) durchgeführt wird;
   - wobei die Befahrungen des Abschnitts der Straße (1) in unterschiedlichen Fahrtrichtungen (A, B) durchgeführt werden, wobei die Ermittlungsdaten der Befahrungen in den unterschiedlichen Fahrtrichtungen (A, B) korreliert werden; und
   - Ermitteln der Nutzbreite (20) aus den ermittelten lateralen Abständen (13, 14), wobei die Nutzbreite (20) aus einer definierten Anzahl von Befahrungen des Abschnitts der Straße (1) ermittelt wird.

2. Verfahren nach Anspruch 1, wobei für den Fall, dass Parklücken (15) nur rechts vom Ermittlungsfahrzeug (10) ermittelt wurden und ein Quotient aus Anzahl von Befahrungen und Anzahl ermittelter Parklücken (15) eine definierte Schwelle überschreitet, die Nutzbreite (20) aus folgender Beziehung ermittelt wird: Nutzbreite > Reichweite der Ermittlungseinrichtung links vom Ermittlungsfahrzeug + Breite des Ermittlungsfahrzeugs + Mittelwert der ermittelten lateralen Abstände rechts vom Ermittlungsfahrzeug.

3. Verfahren nach Anspruch 1, wobei für den Fall, dass Parklücken (15) beidseits des Ermittlungsfahrzeugs (10) ermittelt wurden und ein Quotient aus Befahrungen und Anzahl ermittelter Parklücken (15) eine definierte Schwelle überschreitet, die Nutzbreite (20) aus folgender Beziehung ermittelt wird: Nutzbreite = Mittelwert der ermittelten lateralen Abstände links vom Ermittlungsfahrzeug + Breite des Ermittlungsfahrzeugs + Mittelwert der ermittelten lateralen Abstände rechts vom Ermittlungsfahrzeug.

4. Verfahren nach einem der Ansprüche 1 bis 3, wobei die Nutzbreite (20) von der Ermittlungseinrichtung (12) ermittelt wird.

5. Verfahren nach Anspruch 4, wobei Ermittlungsdaten an eine Servereinrichtung übermittelt werden.

6. Verfahren nach Anspruch 5, wobei die Nutzbreite (20) an die Servereinrichtung übermittelt wird oder wobei die lateralen Abstände (13, 14) an die Servereinrichtung übermittelt werden und wobei die Nutzbreite (20) mittels der Servereinrichtung ermittelt wird.

7. Verfahren nach einem der vorhergehenden Ansprüche, wobei die Nutzbreite (20) über eine definierte Länge des Abschnitts der Straße (1) ermittelt wird.

8. Computerprogrammprodukt mit Programmcodemitteln zum Ausführen des Verfahrens nach einem der Ansprüche 1 bis 7, wenn es auf einem computerlesbaren Datenträger abgespeichert ist oder auf einer Ermittlungseinrichtung (12) abläuft.

**Claims**

1. Method for ascertaining a usable width (20) of a section of a road (1), having the steps:

   - travelling along the road (1) in a first direction of travel (A) and ascertaining parking bays (15) on the basis of echo profiles of an ascertaining device (12) arranged in an ascertaining vehicle (10);
   - ascertaining lateral distances (13, 14) between the ascertaining device (12) and parked vehicles (11) at both road margins, wherein at least one ascertainment of parking bays (15) and lateral distances (13) to the right of the ascertaining vehicle (10) and at least one ascertainment of the parking bays (15) and lateral distances (14) to the left of the ascertaining vehicle (10) are performed;

- wherein the travelling operations along the section of the road (1) are performed in different directions of travel (A, B), wherein the ascertainment data from the travelling operations in the different directions (A, B) are correlated; and
- ascertaining the usable width (20) from the ascertained lateral distances (13, 14), wherein the usable width (20) is ascertained from a defined number of travelling operations along the section of the road (1).

2. Method according to Claim 1, wherein, if parking bays (15) have been ascertained only to the right of the ascertaining vehicle (10), and a quotient of number of travelling operations and number of ascertained parking bays (15) exceeds a defined threshold, the usable width (20) is ascertained from the following relationship: usable width > range of the ascertaining device to the left of the ascertaining vehicle + width of the ascertaining vehicle + mean value of the ascertained lateral distances to the right of the ascertaining vehicle.

3. Method according to Claim 1, wherein, if parking bays (15) have been ascertained to both sides of the ascertaining vehicle (10), and a quotient of travelling operations and number of ascertained parking bays (15) exceeds a defined threshold, the usable width (20) is ascertained from the following relationship: usable width = mean value of the ascertained lateral distances to the left of the ascertaining vehicle + width of the ascertaining vehicle + mean value of the ascertained lateral distances to the right of the ascertaining vehicle.

4. Method according to any of Claims 1 to 3, wherein the usable width (20) is ascertained by the ascertaining device (12).

5. Method according to Claim 4, wherein ascertainment data are transmitted to a server device.

6. Method according to Claim 5, wherein the usable width (20) is transmitted to the server device, or wherein the lateral distances (13, 14) are transmitted to the server device, and wherein the usable width (20) is ascertained by means of the server device.

7. Method according to any of the preceding claims, wherein the usable width (20) is ascertained over a defined length of the section of the road (1).

8. Computer program product with program code means for carrying out the method according to any of Claims 1 to 7 if said computer program product is stored on a computer-readable data carrier or executed on an ascertaining device (12).

**Revendications**

1. Procédé permettant de déterminer une largeur utile (20) d'un tronçon d'une route (1), présentant les étapes suivantes consistant à :

   - passer sur la route (1) dans un premier sens de circulation (A) et déterminer des places de stationnement (15) à l'aide de profils d'écho d'un dispositif de détermination (12) disposé sur un véhicule de détermination (10) ;
   - déterminer des distances latérales (13, 14) entre le dispositif de détermination (12) et des véhicules en stationnement (11) sur les deux bords de la route, au moins une détermination de places de stationnement (15) et de distances latérales (13) étant effectuée à droite du véhicule de détermination (10) et au moins une détermination de places de stationnement (15) et de distances latérales (14) étant effectuée à gauche du véhicule de détermination (10) ;
   - dans lequel les passages sur le tronçon de la route (1) sont effectués dans différents sens de circulation (A, B), les données de détermination des passages étant corrélées avec les différents sens de circulation (A, B) ; et
   - déterminer la largeur utile (20) à partir des distances latérales déterminées (13, 14), la largeur utile (20) étant déterminée à partir d'un nombre défini de passages sur le tronçon de la route (1).

2. Procédé selon la revendication 1, dans lequel, si des places de stationnement (15) n'ont été déterminées qu'à droite du véhicule de détermination (10) et un quotient du nombre de passages et du nombre de places de stationnement déterminées (15) dépasse un seuil défini, la largeur utile (20) est déterminée par la relation suivante : largeur utile > portée du dispositif de détermination à gauche du véhicule de détermination + largeur du véhicule de détermination + moyenne des distances latérales déterminées à droite du véhicule de détermination.

3. Procédé selon la revendication 1, dans lequel, si des places de stationnement (15) ont été déterminées des deux côtés du véhicule de détermination (10) et un quotient des passages et du nombre de places de stationnement déterminées (15) dépasse un seuil défini, la largeur utile (20) est déterminée à partir de la relation suivante : largeur utile = moyenne des distances latérales déterminées à gauche du véhicule de détermination + largeur du véhicule de détermination + moyenne des distances latérales déterminées à droite du véhicule de détermination.

4. Procédé selon l'une quelconque des revendications 1 à 3, dans lequel la largeur utile (20) est déterminée par le dispositif de détermination (12).

5. Procédé selon la revendication 4, dans lequel des données de détermination sont transmises à un dispositif serveur.

6. Procédé selon la revendication 5, dans lequel la largeur utile (20) est transmise au dispositif serveur ou les distances latérales (13, 14) sont transmises au dispositif serveur et la largeur utile (20) est transmise au moyen du dispositif serveur.

7. Procédé selon l'une quelconque des revendications précédentes, dans lequel la largeur utile (20) est déterminée sur une longueur définie du tronçon de la route (1).

8. Produit de programme informatique doté de moyens de code programme pour exécuter le procédé selon l'une quelconque des revendications 1 à 7 lorsqu'il est stocké sur un support de données lisible par ordinateur ou est exécuté sur un dispositif de détermination (12).

**FIG. 1**

**FIG. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004062021 A1
- DE 102009028024 A1
- DE 102008028550 A1
- JP 2009175962 A